# EUROPEAN PATENT SPECIFICATION

(11) **EP 3 799 258 B1**
(45) Date of publication and mention of the grant of the patent: **04.05.2022**
(21) Application number: 20198976.1
(22) Date of filing: 29.09.2020
(51) Int. Cl.: H02J 50/10, B60L 5/00, D04B 15/38

(54) **DEVICE WITH POWER SUPPLY MECHANISM**
VORRICHTUNG MIT STROMVERSORGUNGSMECHANISMUS
DISPOSITIF DOTÉ D'UN MÉCANISME D'ALIMENTATION ÉLECTRIQUE

(30) Priority: 30.09.2019 JP 2019179498
(43) Date of publication of application: 31.03.2021
(73) Proprietor: SHIMA SEIKI MFG., LTD., Wakayama 641-8511 (JP)
(72) Inventor: SHIMOYAMA, Yasuo, Wakayama, 641-8511 (JP); FUJIMOTO, Hiromi, Wakayama, 641-8511 (JP)
(74) Representative: Wimmer, Hubert

(56) References cited:
- EP-A1- 3 447 884
- DE-A1- 1 806 977
- US-A- 3 665 356
- US-A1- 2003 201 862

## Description

### Technical Field

The present invention relates to a device with power supply mechanism that includes a movable body that travels along a rail and a power supply mechanism for supplying electric power to the movable body.

### Background Art

Devices are known that include a movable body that travels along a rail. An example of such a device is a flat knitting machine. In a flat knitting machine that includes a needle bed with a plurality of needles arranged thereon, a plurality of movable bodies are provided that travel along rails and are associated with knitting of a knitted fabric. Examples of the movable bodies include a yarn feeder for feeding a knitting yarn to the needles on the needle bed. In the following description, the yarn feeder is called a "YF" in some cases.

Patent Literature 1 discloses a configuration in which a YF is driven by a linear motor, or a drive motor or the like is attached to the YF to allow the YF to travel by itself. The drive motor provided in the YF and a control device thereof receive electric power supplied by means of contact power supply via a contact strip provided on a rail.

Patent Literature 2 discloses a movable body (reference numeral 300 in Patent Literature 2) that travels on a rail to which a YF is attached and that travels together with the YF with a carrier catching pin inserted thereto. In Patent Literature 2, electric power is supplied to the movable body through contact between a conductive sheet provided on the rail and a carbon brush provided on the movable body, and the conversion pin is put in and taken out. Document US2003/201862 discloses a coaxial inductive power transfer and distribution apparatus that includes a primary conductor that is stationary and a mobile secondary coil magnetically coupled to the stationary primary conductor to provide an inductive power transfer there-between.

### Citation List

### Patent Literature

Patent Literature 1: DE Patent Application Publication No. 4308251
Patent Literature 2: CN Patent Application Publication No. 101139777

### Summary of Invention

### Technical Problem

Both conventional techniques employ a configuration in which electric power is supplied to the movable body by means of contact power supply. In the configuration in which contact power supply is performed, however, there is concern that oil, dust, or the like may enter a contact portion and inhibit power supply. Moreover, in the configuration in which contact power supply is performed, there is also concern that power supply may be inhibited due to the contact portion being worn.

The present invention has been made in view of the foregoing situation, and an object of the invention is to provide a device with power supply mechanism that includes a power supply mechanism for contactlessly supplying electric power to a movable body.

### Solution to Problem

1. A device with power supply mechanism of the present invention includes: a movable body that travels along a rail; and a power supply mechanism that supplies electric power to the movable body,
   the power supply mechanism including:
      a primary coil that extends along the rail;
      a magnetic core that is provided within the primary coil and is shorter than the primary coil;
      a tubular member that is provided in the movable body and into which the primary coil is inserted;
      a secondary coil that is wound around an outer circumferential face of the tubular member and to which electric power is supplied from the primary coil due to electromagnetic induction;
      a first magnet provided in the magnetic core; and
      a second magnet provided in the tubular member,
   wherein the magnetic core moves within the primary coil in conjunction with the movable body, due to a magnetic force of the first magnet and the second magnetic force.
2. In the device with power supply mechanism according to the embodiment, it is possible that the device includes two first magnets, one of the first magnets is provided on a first end side of the magnetic core in an axial direction thereof, and the other one of the first magnets is provided on a second end side of the magnetic core in an axial direction thereof,
   the device includes two second magnets, one of the second megnets is provided on a first end side of the tubular member in an axial direction thereof, and the other one of the second magnets is provided on a second end side of the tubular member in an axial direction thereof,
   the same poles of the first magnets and the second magnets are disposed at opposing positions, and
   the magnetic core is held at a position sandwiched between the two second magnets.
3. In the device with power supply mechanism according to the embodiment of Solution 2 above, it is possible that the same poles of the two first magnets sandwiching the magnetic core are disposed at opposing positions.
4. In the device with power supply mechanism according to the embodiment, it is possible that interposed members disposed between the magnetic core and the first magnets are further provided, and
   the interposed members are made of a non-magnetic material.
5. In the device with power supply mechanism according to the embodiment, it is possible that reinforcing members are further provided that are tubular, are provided on at least one of an inner circumferential side or an outer circumferential side of the primary coil, and holds a shape of the primary coil, and
   the reinforcing members are made of a non-magnetic and insulating material.
6. In the device with power supply mechanism according to the embodiment, it is possible that a connection mechanism is further provided that removably connects the tubular member and the movable body to each other.
7. In the device with power supply mechanism according to the embodiment, it is possible that the device with power supply mechanism is a flat knitting machine.
8. In the device with power supply mechanism according to the embodiment that is a flat knitting machine, it is possible that the movable body is a yarn feeder.

### Advantageous Effects of Invention

According to the device with power supply mechanism of the present invention, electric power can be contactlessly supplied to the movable body, and thus it is possible to eliminate contact failure that may occur in contact power supply. In addition, due to the primary coil being inserted into the tubular member that holds the secondary coil, the power supply mechanism, which includes the primary coil and the secondary coil, is downsized.

In the power supply mechanism provided in the device with power supply mechanism of the present invention, the magnetic core is disposed within the primary coil, and thus the efficiency of power supply from the primary coil to the secondary coil is excellent. This is because, since this power supply mechanism has a configuration in which the magnetic core moves in conjunction with the movable body, the magnetic core need not be provided for the overall length of the primary coil in the axial direction, and the length of the magnetic core in the axial direction need only be a length corresponding to the length of the secondary coil in the axial direction. The shorter the magnetic core is, the less the core loss is, and therefore, the power supply efficiency of the power supply mechanism in the device with power supply mechanism of the present invention is higher than that of a power supply mechanism in which a magnetic core is disposed for the overall length of a primary coil in the axial direction.

According to the configuration of Solution 2 above, the magnetic forces of the first magnet and the second magnet are substantially offset on the first end side of the magnetic core, and the magnetic forces of the first magnet and the second magnet are substantially offset on the second end side of the magnetic core. For this reason, the magnetic forces of the first magnet and the second magnet is unlikely to affect the magnetic core. Accordingly, the power supply efficiency of the power supply mechanism improves.

According to the configuration of Solution 3 above, the magnetic forces of the two first magnets that sandwich the magnetic core are substantially offset within the magnetic core. For this reason, the magnetic forces of the first magnets are unlikely to affect the magnetic core. Accordingly, the power supply efficiency of the power supply mechanism improves.

According to the configuration of Solution 4 above, the power supply efficiency can be increased. This is because, since the first magnet is separated from the magnetic core by the non-magnetic interposed members, the adverse influence that the magnetic force of the first magnets give on the magnetic core can be reduced.

According to the configuration of Solution 5 above, the primary coil is reinforced by the tubular reinforcing members, and thus the primary coil is unlikely to bend. In addition, damage to the primary coil can be suppressed by the reinforcing members. According to the reinforcing members provided on the inner circumferential face of the primary coil, contact between the magnetic core and the primary coil can be suppressed. According to the reinforcing members provided on the outer circumferential face of the primary coil, contact between the tubular member and the primary coil can be suppressed.

According to the configuration of Solution 6 above, the movable body can be removed from the power supply mechanism without removing the tubular member from the primary coil. This configuration enables maintenance of the movable body to be readily performed.

According to the configuration of Solution 7 above, electric power can be contactlessly suppled to the movable body that is included in the flat knitting machine. Examples of the movable body included in the flat knitting machine include a yarn feeder (YF) for feeding a knitting yarn to a needle bed, a gripper for gripping a knitting yarn, a knitting yarn cutter for cutting a knitting yarn, or the like.

According to the configuration of Solution 8 above, electric power can be contactlessly supplied to a YF. Since the YF is located at a position close to a knitting area, if electric power can be supplied to the YF, various kinds of information associated with the knitting state can be obtained. For example, as will be described later, it is possible to provide the YF with a tension sensor and obtain information related to the tension of a knitting yarn, and to provide the YF with a position sensor and obtain information related to an accurate position of the YF. It is also possible to provide the YF with a plurality of electric devices to obtain a plurality of pieces of information from these electric devices and carry out a plurality of operations.

### Brief Description of Drawings

FIG. 1 is a schematic front elevational view of a flat knitting machine that is a device with power supply mechanism according to an embodiment and that includes a power supply mechanism.
FIG. 2 is a schematic view of a yarn feeder as viewed from one face side of a rail.
FIG. 3 is a schematic view of the yarn feeder as viewed from the side opposite to the side shown in FIG. 2.
FIG. 4 is a schematic vertical cross-sectional view of the power supply mechanism.
FIG. 5 is a conceptual diagram showing a state of magnetic poles of first magnets and second magnets that are included in the power supply mechanism shown in FIG. 4.
FIG. 6 is a schematic diagrame showing an arrangement state of the primary coil that is wound in a divided manner described in Embodiment 2.
FIG. 7 is a conceptual diagram showing a power supply mechanism described in Embodiment 3.
FIG. 8 is a schematic diagram of a power supply mechanism described in Embodiment 4.

### Description of Embodiments

### Embodiment 1

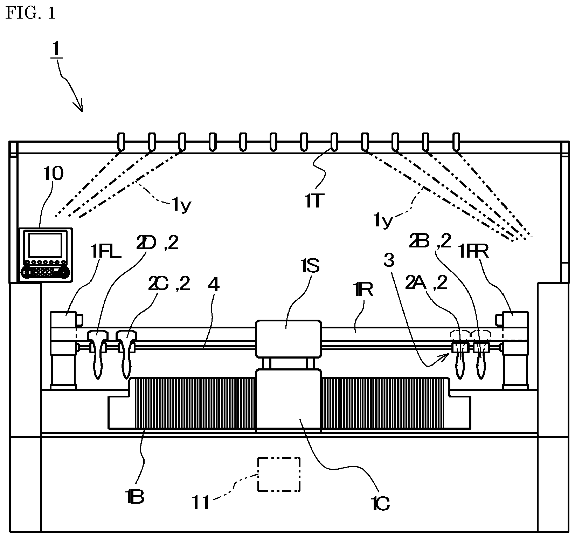

As an example of a device with power supply mechanism according to an embodiment of the present invention, a flat knitting machine 1 for knitting a knitted fabric will be described below based on FIGS. 1 to 5.

As shown in FIG. 1, the flat knitting machine 1 includes a pair of needle beds 1B that are disposed opposing each other in a depth direction of the paper plane, and yarn feeders 2A to 2D for feeding knitting yarns 1y to a needle bed gap formed between the needle beds 1B. In the following description, a yarn feeder will be referred to as a "YF". A plurality of needles are provided in parallel on the needle beds 1B, and these needles are driven by a cam system, which is mounted in a carriage 1C that travels back and forth on the needle beds 1B. Meanwhile, the YFs 2A to 2D travel along rails 1R. The rails 1R span between a pair of frames 1FR and 1FL. The frames 1FR and 1FL are erected on respective end sides of the flat knitting machine 1, and are unmovable members that are integrated with the flat knitting machine 1. A plurality of rails 1R are arranged in parallel in the depth direction of the paper plane, and all of the rails 1R extend above and parallel to the needle beds 1B. In the following description, when items common to the YFs 2A to 2D are described, the YFs 2A to 2D will be referred to as YFs 2 without distinction.

In this example, a plurality of YFs 2 are attached to one rail 1R. The YFs 2A and 2B are attached to a surface on the distal side of the paper plane of the rail 1R, and the YFs 2C and 2D are attached to a surface on the proximal side of the paper plane of the rail 1R. These YFs 2 travel along the rail 1R by being selected by a selector 1S, which covers the rail 1R from above, and being caused to travel following the selector 1S. A YF 2 is selected due to a retractable carrier catching pin provided in the selector 1S engaging with the YF 2. The selector 1S is coupled to the carriage 1C and integrally travels with the carriage 1C. As a result of the selector 1S selecting the YF 2 to be used in knitting and causing the YF 2 to travel accompanying the selector 1S, knitting is performed using a knitting yarn 1y fed from the YF2. Note that the configuration for causing the YFs 2 to travel is not limited to the configuration in this example, and the YFs 2 may alternatively be configured to be of a self-traveling type. The carriage 1C and the selector 1S operate using electric power from a power supply circuit 11. These operations are controlled by a computer 10 provided in the flat knitting machine 1.

The YFs 2 receive a supply of knitting yarns 1y that are fed from a knitting yarn feed source (not shown), such as a cone disposed above the flat knitting machine 1, via a top tension device 1T and a side tension device (not shown) provided on a side of the flat knitting machine 1. That is to say, the YFs 2 in this example are configured to receive the supply of the knitting yarns 1y from the side thereof. Unlike this example, the YFs 2 may alternatively be configured to receive the supply of the knitting yarns 1y from above the YFs 2.

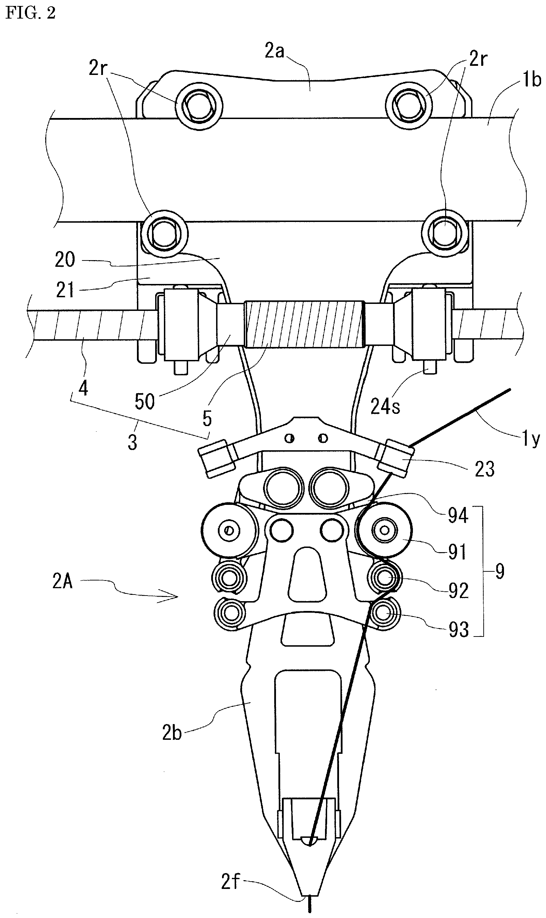

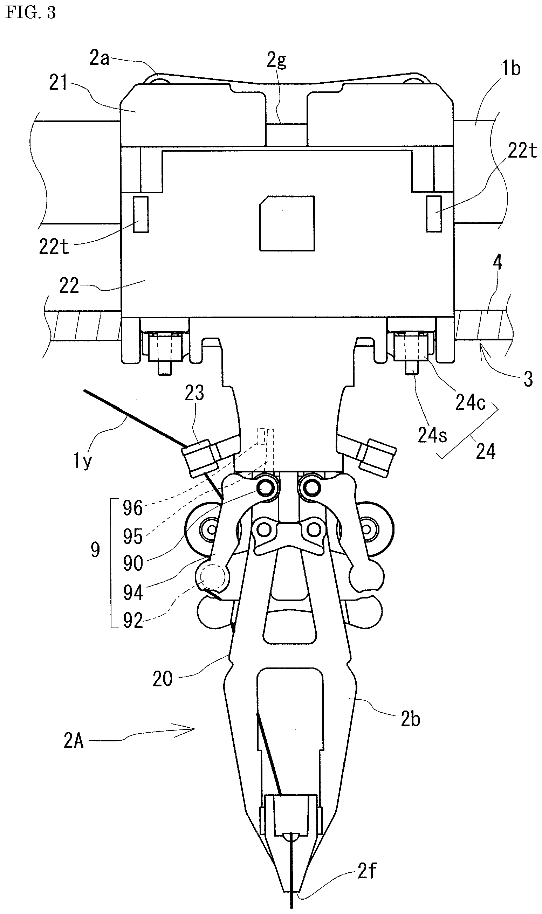

In the flat knitting machine 1 in this example, a control circuit and at least one electric device that operates under the control of the control circuit are provided in the YFs 2, and a non-contact power supply mechanism 3 for supplying electric power to the control circuit and the electric device is also provided. Firstly, a schematic configuration of the YFs 2 will be briefly described based on FIGS. 2 and 3, taking the YF 2A as an example, and then the power supply mechanism 3 will be described. Lastly, the control circuit and the electric device that operate using electric power from the power supply mechanism 3 will be mentioned.

### Yarn Feeder

FIG. 2 shows the YF 2A attached to the rail 1R as viewed from the proximal side of the paper plane of FIG. 1, and FIG. 3 shows this YF 2A as viewed from the distal side of the paper plane of FIG. 1. FIGS. 2 and 3 show only an elongated protrusion 1b that is provided on a side face of the rail 1R and against which the YF 2A slides. It is assumed that FIG. 2 shows the back face of the YF 2A, and FIG. 3 shows the front face of the YF 2A, for convenience. The YF 2A in this example shown in FIGS. 2 and 3 includes a main body portion 20 and a mounting portion 21. Needless to say, the configuration of the YF 2A shown in FIGS. 2 and 3 is merely an example, and the present invention is not limited to this configuration. Note that FIGS. 2 and 3 emphasize a knitting yarn 1y such that the path of the knitting yarn 1y can be readily understood.

The main body portion 20 is an elongated plate material that extends downward from the position of the rail 1R and includes traveling rollers 2r that hold the protrusion 1b of the rail 1R from above and below. More specifically, the main body portion 20 can be divided into a carrier portion 2a in which the traveling rollers 2r are provided, and a hanging portion 2b that extends downward in a hanging manner from the carrier portion 2a. In terms of ensuring strength, it is preferable that the main body portion 20 is made of a metal. As shown in FIG. 3, a pin groove 2g, into and from which the carrier catching pin of the selector 1S shown in FIG. 1 is inserted and pulled out, is provided at an upper edge of the carrier portion 2a. Meanwhile, a yarn feed port 2f for guiding the knitting yarn 1y to the needle bed gap is provided at a lower end of the hanging portion 2b, and introduction guides 23 for guiding the knitting yarn 1y toward the yarn feed port 2f side are provided at a position slightly higher than an intermediate portion. A pair of introduction guides 23 are provided, one on the left side and the other one on the right side. The introduction guides 23 in this example are tubular members that are open obliquely upward. Note that the introduction guides 23 are not limited to tubular members, and may alternatively be constituted by rollers each having a rotary shaft that extends in a thickness direction of the YF 2A.

The mounting portion 21 is a substantially T-shaped plate-like member that is provided on the front side of the carrier portion 2a shown in FIG. 3. The mounting portion 21 is a portion for providing a later-described control circuit 22 and the like, and is made of an insulating material. A configuration may alternatively be employed in which the mounting portion 21 is formed to have a box shape and the control circuit 22 is accommodated therein. In this case, if the mounting portion 21 has a lid, the control circuit 22 can be protected from dust, oil, or the like.

### Power Supply Mechanism

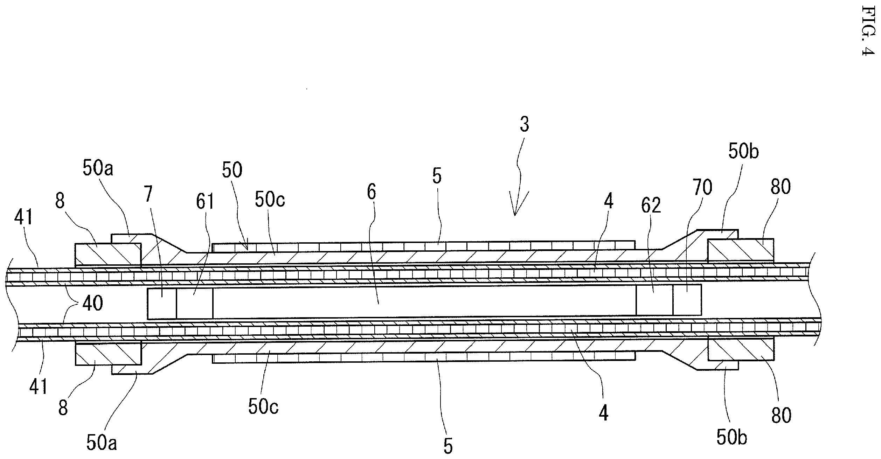

As shown in FIG. 4, the power supply mechanism 3 includes a primary coil 4, a magnetic core 6, a tubular member 50, a secondary coil 5, first magnets 7 and 70, and second magnets 8 and 80. The primary coil 4 is connected to the power supply circuit 11 of the flat knitting machine 1 in FIG. 1, and receives a supply of AC power from the power supply circuit 11. Meanwhile, the secondary coil 5 is coaxial with the primary coil 4 in the YF 2A. Accordingly, when an alternating current flows through the primary coil 4, an induced current flows through the secondary coil 5 due to electromagnetic induction. Two end portions of the secondary coil 5 are electrically connected to the later-described control circuit 22. That is to say, the secondary coil 5 functions as a power supply portion for supplying electric power obtained from the primary coil 4 due to electromagnetic induction to the control circuit 22. Constituent elements of the power supply mechanism 3 will be described below.

### Primary Coil

The primary coil 4 is configured by winding a winding wire, such as an enameled wire. As shown in FIG. 1, this primary coil 4 has an axis that extends along the rails 1R and parallel to the axes of the rails 1R. The primary coil 4 has a length corresponding to a movable area of the YF 2A. In this example, the primary coil 4 has a length equal to that of the rails 1R, e.g. a length of about 1800 mm. The diameter of the primary coil 4 is about 4 mm to 5 mm.

Here, in the flat knitting machine 1, a plurality of rails 1R are arranged in the front-rear direction of the flat knitting machine 1, and it is therefore difficult to dispose the primary coil 4 between the rails 1R. Also, in the flat knitting machine 1 in this example, the selector 1S travels above the rails 1R. Thus, to dispose the primary coil 4 above the rails 1R, the selector 1S needs to be located higher than the current position, leading to an increase in the size of the flat knitting machine 1. In addition, in the case of disposing the primary coil 4 above the rails 1R, the secondary coil 5 to be provided for the YF 2A also needs to be provided above the YF 2A, leading to an increase in the size of the YF 2A. In contrast, in the configuration in this example, the primary coil 4 is provided in an empty space below the rails 1R, and thus, no significant change in design is required in the constituent elements other than the YF 2A.

The primary coil 4 in this example extends linearly. This is because the rails 1R of the flat knitting machine 1 extend linearly. In devices other than the flat knitting machine 1, at least a portion of the rails 1R may be bent. In this case, the primary coil 4 is also bent parallel to the rails 1R.

As shown in FIG. 4, it is preferable that the primary coil 4 is reinforced on at least either the inner circumferential face or outer circumferential face thereof. In the power supply mechanism 3 in this example, a tubular reinforcing member 40 is provided on the inner circumferential side of the primary coil 4, and a tubular reinforcing member 41 is also provided on the outer circumferential side of the primary coil 4. The shape of the primary coil 4 can be readily maintained by the reinforcing members 40 and 41. One end of each of these reinforcing members 40 and 41 is fixed to the frame 1FL, and the other end is fixed to the frame 1FR.

The reinforcing member 40 suppresses the later-described magnetic core 6 from coming into direct contact with the primary coil 4, and also contributes to suppressing damage to the primary coil 4. A lubricant may also be disposed in an inner portion of the reinforcing member 40. Meanwhile, the reinforcing member 41 suppresses the later-described tubular member 50 from coming into direct contact with the primary coil 4, and also contributes to suppressing damage to the primary coil 4. A lubricant may also be disposed on an outer surface of the reinforcing member 41.

It is preferable that the reinforcing members 40 and 41 are made of a non-magnetic and insulating material. Examples of non-magnetic and insulating materials may include fiber reinforced plastic that contains glass fiber or aramid fiber. Fiber reinforced plastic has excellent strength. For example, in the case of the reinforcing members 40 and 41 that is made of glass fiber reinforced plastic, the thickness thereof can be about 1 mm. Carbon fiber, which is conductive, is not favorable as fiber contained in the fiber reinforced plastic. This is because the primary coil 4 and the reinforcing members 40 and 41 may be short-circuited, and an eddy current may be generated in carbon fiber, resulting in a decrease in the efficiency of power supply from the primary coil 4 to the secondary coil 5.

### Magnetic Core

The magnetic core 6 is disposed within the primary coil 4, i.e., within the reinforcing member 40 in this example. The magnetic core 6 is made of a magnetic member such as ferrite. The magnetic core 6 increases the inductance of the primary coil 4 and improves the efficiency of power supply from the primary coil 4 to the secondary coil 5.

The magnetic core 6 is a columnar body that extends along the shape of the inner circumferential face of the primary coil 4, i.e. the shape of the inner circumferential face of the reinforcing member 40. The magnetic core 6 in this example is formed to have a columnar shape. The length of the magnetic core 6 in the axial direction is a length corresponding to the length of the later-described secondary coil 5 in the axial direction. For example, it is preferable that the length of the magnetic core 6 in the axial direction is approximately the same as the length of the secondary coil 5 in the axial direction.

The magnetic core 6 may also be constituted by a plurality of divided pieces. A magnetic core constituted by a plurality of divided pieces can readily move within the primary coil 4 even if the primary coil 4 has a bent shape. The divided pieces need not be connected to each other, or may be flexibly connected to each other via a connecting member such as one made of plastic.

### First Magnet

The first magnet 7 and the first magnet 70 are provided at a first end side and a second end side, respectively, of the magnetic core 6 in the axial direction. The first magnets 7 and 70 are permanent magnets. The first magnets 7 and 70 have a bar shape, with the north pole at one end and the south pole at the other end. The magnetic flux of the first magnets 7 and 70 flows inside the bars in the axial direction, leaks out from one end of the bar to the outside, and returns to the other end side. The first magnets 7 and 70 are constituent elements that cooperate with the later-described second magnets 8 and 80 to move the magnetic core 6 in conjunction with the movable body 2A. It is preferable that the first magnets 7 and 70 have a strong magnetic force. For example, the first magnets 7 and 70 are neodymium magnets. The directions of the magnetic poles of the first magnets 7 and 70 will be described later.

In this example, an interposed member 61 is disposed between one end face of the magnetic core 6 and the first magnet 7, and an interposed member 62 is disposed between the other end face of the magnetic core 6 and the first magnet 70. The interposed members 61 and 62 are made of, for example, a non-magnetic material such as plastic. Since the magnetic core 6 is separated from the first magnets 7 and 70 by the interposed members 61 and 62, it is possible to suppress the magnetic flux of the first magnets 7 and 70 from passing through the magnetic core 6 and disturbing the magnetic flux that is generated in the magnetic core 6 by excitation of the primary coil 4. It is preferable that the separation distance is 5 mm or more. From the viewpoint of downsizing the power supply mechanism 3, it is preferable that the separation distance is 20 mm or less. These members need not be integrated. In the case of integrating these members, for example, the members may be joined with an adhesive or the like. Alternatively, these members may be integrated by being disposed within a non-magnetic resin tube.

### Tubular Member

The tubular member 50 is provided on the outer circumferential face of the primary coil 4, i.e. on the outer circumferential face of the reinforcing member 41 in this example. In other words, the primary coil 4 is inserted into the tubular member 50. This tubular member 50 is a member provided on the YF 2A, and holds the secondary coil 5 and the second magnets 8 and 80. The length of the tubular member 50 in the axial direction is selected, as appropriated, in accordance with the size of the movable body. In the case of this example, the length of the tubular member 50 in the axial direction is about 70 mm to 90 mm. It is preferable that the tubular member 50 is made of a non-magnetic material, e.g. fiber reinforced plastic.

The tubular member 50 includes a first-side tube portion 50a, a second-side tube portion 50b, and an intermediate tube portion 50c. The first-side tube portion 50a and the second-side tube portion 50b are formed on the first end side and the second end side, respectively, of the tubular member 50 in the axial direction. The intermediate tube portion 50c is a portion that connects the first-side tube portion 50a and the second-side tube portion 50b to each other. The inner diameter of the intermediate tube portion 50c is greater than the outer diameter of the reinforcing member 41 by about 1 mm. The secondary coil 5 is disposed on the outer circumferential face of the intermediate tube portion 50c. Meanwhile, the outer diameter of the first-side tube portion 50a and the second-side tube portion 50b is greater than the outer diameter of the intermediate tube portion 50c. A circular accommodating portion to which the second magnet 8 is fitted is formed at an end portion of the first-side tube portion 50a, and a circular accommodating portion to which the second magnet 80 is fitted is formed at an end portion of the second-side tube portion 50b. The inner diameter of the accommodating portions is greater than the inner diameter of the intermediate tube portion 50c. For this reason, the second magnets 8 and 80 are stopped at steps formed between the inner circumferential faces of the respective accommodating portions and the inner circumferential face of the intermediate tube portion 50c.

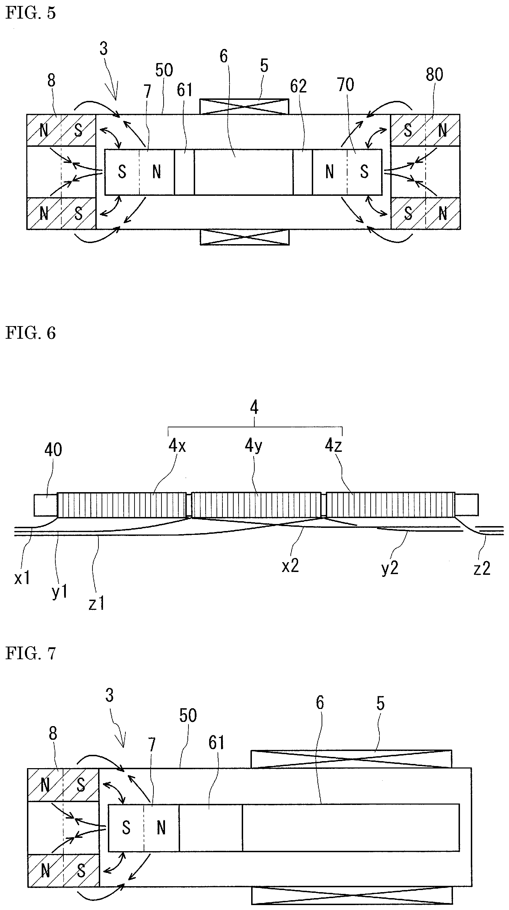

As shown in FIG. 3, the tubular member 50 in this example has connection mechanisms 24 that removably connect the YF 2A and the tubular member 50 to each other. Each of the connection mechanisms 24 in this example is constituted by a connection tube portion 24c and a connection shaft portion 24s. One connection tube portion 24c is provided on each of the back sides of the first-side tube portion 50a and the second-side tube portion 50b in FIG. 5. That is to say, the connection tube portions 24c are integrally provided on the tubular member 50. The axis of an open hole in each connection tube portion 24c extends in the longitudinal direction of the YF 2A. This longitudinal direction coincides with the height direction of the flat knitting machine 1. Meanwhile, the connection shaft portions 24s are integrated with the YF 2A. In this example, the connection shaft portions 24s are formed by portions of the mounting portion 21 extending to form bar shapes. The axial direction of the connection shaft portions 24s coincide with the axial direction of the connection tube portions 24c. The YF 2A and the tubular member 50 are connected to each other as a result of the connection shaft portions 24s being inserted into the connection tube portions 24c. The connection shaft portions 24s may be screws. If the connection shaft portions 24s are screws, the YF 2A and the tubular member 50 can be firmly connected.

When the YF 2A is removed from the tubular member 50, fixation of the traveling rollers 2r to the main body portion 20 shown in FIG. 2 is loosened, and the gripping force of the traveling rollers 2r with respect to the elongated protrusion 1b is loosened. Then, the YF 2A can be removed from the tubular member 50 only by pulling the YF 2A upward. This configuration allows maintenance of the YF 2A to be readily performed. If the YF 2A cannot be removed from the tubular member 50, when maintenance of the YF 2A is performed, the YF 2A will be moved to an end portion of the primary coil 4 and be removed together with the tubular member 50 from the primary coil 4.

### Secondary Coil

The secondary coil 5 is configured by winding a winding wire, such as an enameled wire. The length of the secondary coil 5 in the axial direction is about 50 mm to 70 mm. That is to say, the secondary coil 5 is considerably shorter than the primary coil 4. Two ends of the secondary coil 5 are connected to the control circuit 22 of the YF 2A via a connector or the like. The connector is removable.

### Second Magnet

The second magnets 8 and 80 are tubular bodies that have an open hole into which the primary coil 4 is inserted. The second magnets 8 and 80 in this example are cylindrical bodies. The second magnets 8 and 80, which are cylindrical bodies, have the north pole at one end in the axial direction, and the south pole at the other end. The magnetic flux of the second magnets 8 and 80 includes magnetic flux that returns from one end of the cylindrical bodies to the other end of the cylindrical bodies through the inside of the cylindrical bodies, and magnetic flux that returns from one end of the cylindrical bodies to the other end of the cylindrical bodies through the outside of the cylindrical bodies. The outer diameter of the second magnets 8 and 80, which are cylindrical bodies, substantially coincides with the inner diameter of the accommodating portions of the tubular member 50. Meanwhile, the inner diameter of the second magnets 8 and 80 substantially coincides with the inner diameter of the intermediate tube portion 50c of the tubular member 50.

In the configuration in this example, the length of the magnetic core 6 in the axial direction is considerably shorter than the length of the primary coil 4 in the axial direction. The shorter the magnetic core 6 is, the less the core loss is, and thus the efficiency of power supply from the primary coil 4 to the secondary coil 5 improves. Furthermore, since the power supply efficiency improves, sufficient electric power can be supplied to the secondary coil 5 even if the cross-sectional area of the primary coil 4 is reduced. For example, the cross-sectional area of the primary coil 4 in this example may be 50% or less of the cross-sectional area of a primary coil in a configuration in which a magnetic core is disposed for the overall length of the primary coil. If the cross-sectional area of the primary coil 4 is small, the primary coil 4 does not hinder the arrangement of other constituent elements even if the primary coil 4 for the YFs 2A and 2B and the primary coil 4 for the YF 2C and 2D are arranged at the same height below the rails 1R in FIG. 1.

### Arrangement State of First Magnets and Second Magnets

Next, the directions of the magnetic poles of the magnets 7, 70, 8, and 80 in this example will be described based on FIG. 5. FIG. 5 omits the primary coil 4 and simplifies the tubular member 50. In FIG. 5, double arrows indicate repulsion of the magnets, and a pair of arrows with their arrow heads opposing each other indicates suction of the magnets. These arrows do not indicate magnetic field lines.

In this example, the same poles of the first magnet 7 and the second magnet 8 are disposed at opposing positions on the first end side of the magnetic core 6, and the same poles of the first magnet 70 and the second magnet 80 are disposed at opposing positions at the second end side of the magnetic core 6. The south pole of the first magnet 7 and the south pole of the second magnet 8 repel each other at the first end side of the magnetic core 6. However, the south pole of the first magnet 7 and the north pole of the second magnet 8 pull against each other with the open hole in the second magnet 8 serving as a passage of the magnetic force, and also pull against each other outside the second magnet 8. Similarly, the south pole of the first magnet 70 and the south pole of the second magnet 80 repel each other on the second end side of the magnetic core 6. However, the south pole of the first magnet 70 and the north pole of the second magnet 80 pull against each other with the open hole in the second magnet 80 serving as a passage of the magnetic force, and also pull against each other outside the second magnet 80. For this reason, the magnetic core 6 is held between the two second magnets 8 and 80, in a state of floating within the tubular member 50. As a result, the magnetic core 6 is always held at a position corresponding to the secondary coil 5. Accordingly, the effect of improving the power supply efficiency can be obtained by the magnetic core 6, no matter where the YF 2A is located on the rails 1R.

Note that the magnetic poles of the first magnets 7 and 70 and the second magnets 8 and 80 may be opposite to those in the example shown in FIG. 5. That is to say, a configuration may be employed in which the north pole of the first magnet 7 and the north pole of the second magnet 8 are disposed at opposing positions, and the north pole of the first magnet 70 and the north pole of the second magnet 80 are disposed at opposing positions. Unlike this example, a configuration may also be employed in which the opposite poles of the first magnet 7 and the first magnet 70 that sandwich the magnetic core 6 are disposed at opposing positions, i.e. the north pole (south pole) of the first magnet 7 and the south pole (north pole) of the first magnet 70 are disposed at opposing positions with the magnetic core 6 therebetween.

According to the arrangement of the magnets 7, 70, 8, and 80 shown in FIG. 5, the magnetic core 6 is unlikely to be affected by magnetic force of the magnets 7, 70, 8, and 80. The magnetic force of the first magnet 7 and the magnetic force of the second magnet 8 are offset at the first end side of the magnetic core 6. Also, the magnetic force of the first magnet 70 and the magnetic force of the second magnet 80 are offset at the second end side of the magnetic core 6. Furthermore, in the configuration shown in FIG. 5, the same poles of the first magnet 7 and the first magnet 70 that sandwich the magnetic core 6 oppose each other. For this reason, the number of magnetic field lines of the first magnet 7 and the first magnet 70 that pass through the inside of the magnetic core 6 is small. That is to say, the magnetic core 6 is unlikely to be affected by the first magnets 7 and 70 in the direction of the magnetic flux of the primary coil 4, and the magnetic properties of the magnetic core 6 is unlikely to deteriorate. Accordingly, the effect of improving the power supply efficiency obtained by the magnetic core 6 is unlikely to be lost.

### Electric Device and Control Circuit

As shown in FIG. 3, the control circuit 22 is provided on the front side of the mounting portion 21, and operates using electric power from the secondary coil 5. The control circuit 22 includes a control unit that controls electric devices mounted in the YF 2A. Tension sensors 9 and communication devices 22t are mounted as electric devices in the YF 2A in this example. The electric devices are not limited to the tension sensors 9. Electric devices other than the tension sensors 9 will be described later. The control unit of the control circuit 22 performs control in conjunction with an integrated control unit provided in the computer 10 of the flat knitting machine 1.

Each of the tension sensors 9 acquires a physical quantity correlated with the tension of the knitting yarn 1y, and outputs the acquired physical quantity as an electrical signal to the control circuit 22. The physical quantity to be acquired is not specifically limited as long as it is a physical quantity that varies in correlation with a change in the tension of the knitting yarn 1y. Each of the tension sensors 9 in this example comes into contact with the knitting yarn 1y and acquires a physical quantity corresponding to the stress received from the knitting yarn 1y. Two tension sensors 9 are provided, one on the left side and the other one on the right side.

As shown in FIG. 2, each of the tension sensors 9 in this example includes three guide rollers 91, 92, and 93. The knitting yarn 1y is hooked on the inner side of the guide roller 91 in the width direction of the YF 2A, the outer side of the guide roller 92, and the inner side of the guide roller 93, and is then guided to the yarn feed port 2f. As shown in FIG. 3, the guide roller 92 is provided at a leading end of an arm 94, which rotates around a rotary shaft 90. A lever 95 extends on the side opposite to the arm 94 with the rotary shaft 90 therebetween. A pressure sensor 96 is provided on the outer side in the width direction of the YF 2A with respect to the lever 95. The pressure sensor 96 may be a piezo element, a strain gauge, or the like. The arm 94 and the pressure sensor 96 are provided in a gap between the main body portion 20 and the mounting portion 21. The higher the tension of the knitting yarn 1y is, the further an end portion of the arm 94 on the guide roller 92 side swings inward around the rotary shaft 90, and the further the lever 95 swings outward. Due to the lever 95 pressing the pressure sensor 96, the pressure corresponding to the tension of the knitting yarn 1y is measured by the pressure sensor 96. By providing the YF 2A with the tension sensors 9, slack and tension of the knitting yarn 1y can be understood more quickly than with the conventional techniques.

The physical quantity acquired by the tension sensors 9 is input as an electrical signal to the control circuit 22. For example, the control unit of the control circuit 22 references a look-up table that indicates a correlation between the physical quantity and the tension of the knitting yarn 1y, and obtains the tension of the knitting yarn 1y. The control circuit 22 transmits information representing the tension of the knitting yarn 1y to the computer 10 of the flat knitting machine 1, using the communication device 22t. The computer 10 compares the tension of the knitting yarn 1y with a predetermined set tension, and controls a tension adjustment mechanism, which is not shown in the diagrams, such that the tension of the knitting yarn 1y approaches the set tension. Examples of the communication device 22t include an optical wireless communication device, and a wireless communication device such as a Wi-Fi (registered trademark) communication device, for example. The communication device 22t may also be configured such that the YF 2A can receive information from the computer 10.

### Other Electric Devices

The tension adjustment mechanism can also be provided in the YF 2A. For example, a tension adjustment mechanism is possible that adjusts the tension of the knitting yarn 1y by pinching the knitting yarn 1y and adjusting the amount by which the knitting yarn 1y is fed. If the YF 2A is provided with the tension adjustment mechanism, the tension of the knitting yarn 1y is quickly adjusted to an appropriate value, and the quality of the knitted fabric improves.

Other examples of the electric devices mounted in the YF 2A may include a camera, a position measuring device for measuring the position of the YF 2A on the rails 1R, a driving mechanism for causing the YF 2A to travel by itself, and so on. Since a presser device or the like is also disposed near the needle bed gap in addition to the YF 2A, it is difficult to check the details of an area around the needle bed gap. However, if a camera is mounted in the YF 2A, the details of the area around the needle bed gap can be readily checked. In addition, if the YF 2A is provided with a driving mechanism for causing the YF 2A to travel by itself, the selector 1S in FIG. 1 can be omitted. The primary coil 4 can also be disposed above the rails 1R.

### Embodiment 2

Although Embodiment 1 has described an example of applying a non-contact power supply mechanism 3 to the YF 2A, the power supply mechanism 3 can also be applied to movable bodies other than the YF 2A. For example, the power supply mechanism 3 can be applied to a gripper for gripping the knitting yarn 1y extending from a needle on the needle bed 1B to the YF 2A, a knitting yarn cutting mechanism for cutting the knitting yarn 1y between the gripper and the needle, or the like.

### Embodiment 3

Embodiment 3 will describe the power supply mechanism 3 that includes a primary coil 4 that is wound in a divided manner, based on FIG. 6. As shown in FIG. 6, the primary coil 4 in this example includes three divided coils 4x, 4y, and 4z, which are formed with different windings. The number of divisions is not limited to three, and may be two, or may be four or more. In the configuration in this example, the YF 2A includes a position measuring device.

A lead x1 of the divided coil 4x on the first end side is pulled out to the first end side of the primary coil 4. A lead x2 of the divided coil 4x on the second end side is pulled out to the second end side of the primary coil 4 along outer circumferential faces of the divided coils 4y and 4z. Leads y1 and z1 on the first end side and leads y2 and z2 on the second end side of the divided coils 4y and 4z are also pulled out to the first end side and the second end side, respectively, of the primary coil 4.

According to the configuration in this example, a current can be caused to only flow through a necessary one of the divided coils 4x, 4y, and 4z. For example, the computer 10 grasps the position of the YF 2A based on information from the position measuring device of the YF 2A, and causes a current to only flow through the divided coil 4z if the YF 2Ais at the position of the divided coil 4z. If the YF 2A travels to the position of the divided coil 4y, a current is caused to only flow through the divided coil 4y. In addition, for example, in the process of the YF 2A moving from the divided coil 4x to the divided coil 4y, the two divided coils 4x and 4y may be excited when the position of the YF 2A is in a predetermined area of the divided coil 4x on the divided coil 4y side and a predetermined area of the divided coil 4y on the divided coil 4x side. In this case, the loss is reduced compared with the case of causing a current to flow through the overall length of the primary coil 4. Accordingly, the power supply efficiency of the power supply mechanism 3 improves.

### Embodiment 4

Embodiment 4 will describe a power supply mechanism 3 that holds the magnetic core 6 in a state different from Embodiment 1, based on FIG. 7. FIG. 7 can be viewed in the same manner as FIG. 5.

In the power supply mechanism 3 in FIG. 7, the first magnet 7 is only disposed on the first end side of the magnetic core 6, and the second magnet 8 is only disposed on the first end side of the tubular member 50 corresponding to the first magnet 7. As shown in FIG. 7, the south poles of the first magnet 7 and the second magnet 8 repel each other, but the south pole of the first magnet 7 pulls against the north pole of the second magnet 8, and the south pole of the second magnet 8 pulls against the north pole of the first magnet 7. Therefore, even if only one pair of the first magnet 7 and the second magnet 8 is provided, the magnetic core 6 is held at a position corresponding to the secondary coil 5. The configuration in this example can also move the magnetic core 6 in accordance with movement of the YF 2A.

### Embodiment 5

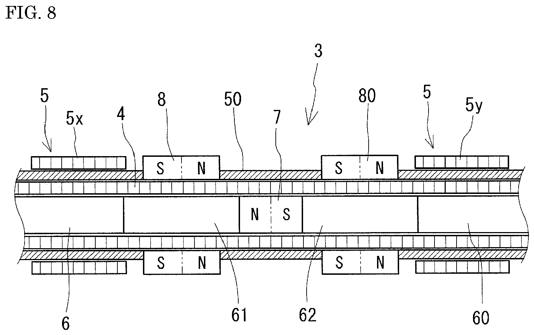

Embodiment 5 will describe a power supply mechanism 3 in which one first magnet 7 is sandwiched by two magnetic cores 6 and 60, based on FIG. 8.

In the configuration in this example, the two second magnets 8 and 80 are disposed at positions sandwiching the first magnet 7 in the tubular member 50. The same poles of the first magnet 7 and the second magnet 8 are disposed at opposing positions, and the same poles of the first magnet 7 and the second magnet 80 are also disposed at opposing positions. Thus, the magnetic cores 6 and 60 are held at predetermined positions within the primary coil 4.

Also, in the configuration in this example, the secondary coil 5 is configured by connecting divided coils 5x and 5y to each other in series. The divided coil 5x is wound at a position corresponding to the magnetic core 6, and the divided coil 5y is wound at a position corresponding to the magnetic core 60. The configuration in this example can also move the magnetic cores 6 and 60 in accordance with movement of the YF 2A.

### Embodiment 6

The device with power supply mechanism that includes the power supply mechanism described in any of the embodiments is not limited to a flat knitting machine. Examples of the device with power supply mechanism that includes the power supply mechanism in any of the embodiments may include a printer, a cutting plotter, or the like. In the case of a printer, a printer head corresponds to a movable body. In the case of a cutting plotter, a cutter unit corresponds to a movable body. In addition, examples also include, for example, an assembly work machine in which an electric tool such as an electric screwdriver is attached onto a rail such that the tool can travel in a factory. In this case, the electric tool is a movable body, and an operator uses the electric tool by moving it manually. If the movable body itself is an electric device, no control circuit is required in the movable body.

## Claims

1. A device with power supply mechanism (1) comprising: a movable body (2) that travels along a rail (1R); and a power supply mechanism (3) that supplies electric power to the movable body (2),
the power supply mechanism (3) comprising:
a primary coil (4) that extends along the rail (1R);
a magnetic core (6) that is provided within the primary coil (4) and is shorter than the primary coil (4);
a tubular member (50) that is provided in the movable body (2) and into which the primary coil (4) is inserted;
a secondary coil (5) that is wound around an outer circumferential face of the tubular member (50) and to which electric power is supplied from the primary coil (4) due to electromagnetic induction;
a first magnet (7) provided in the magnetic core (6); and
a second magnet (8) provided in the tubular member (50),
wherein the magnetic core (6) moves within the primary coil (4) in conjunction with the movable body (2), due to a magnetic force of the first magnet (7) and the second magnetic force (8).

2. The device with power supply mechanism (1) according to claim 1,
wherein the device comprises two first magnets (7, 70), one of the first magnets (7, 70) is provided on a first end side of the magnetic core (6) in an axial direction thereof, and the other one of the first magnets (7, 70) is provided on a second end side of the magnetic core (6) in an axial direction thereof,
the device comprises two second magnets (8, 80), one of the second megnets (8, 80) is provided on a first end side of the tubular member (50) in an axial direction thereof, and the other one of the second magnets (8, 80) is provided on a second end side of the tubular member (50) in an axial direction thereof,
the same poles of the first magnets (7, 70) and the second magnets (8, 80) are disposed at opposing positions, and
the magnetic core (6) is held at a position sandwiched between the two second magnets (8, 80).

3. The device with power supply mechanism (1) according to claim 2,
wherein the same poles of the two first magnets (7, 70) sandwiching the magnetic core (6) are disposed at opposing positions.

4. The device with power supply mechanism (1) according to any one of claims 1 to 3, further comprising
interposed members (61, 62) disposed between the magnetic core (6) and the first magnets (7, 70),
wherein the interposed members (61, 62) are made of a non-magnetic material.

5. The device with power supply mechanism (1) according to any one of claims 1 to 4, further comprising
reinforcing members (40, 41) that are tubular, are provided on at least one of an inner circumferential side or an outer circumferential side of the primary coil (4), and holds a shape of the primary coil (4),
wherein the reinforcing members (40, 41) are made of a non-magnetic and insulating material.

6. The device with power supply mechanism (1) according to any one of claims 1 to 5, further comprising
a connection mechanism (24) that removably connects the tubular member (50) and the movable body (2) to each other.

7. The device with power supply mechanism (1) according to any one of claims 1 to 6, wherein the device with power supply mechanism (1) is a flat knitting machine.

8. The device with power supply mechanism (1) according to claim 7, wherein the movable body (2) is a yarn feeder (2).

## Patentansprüche

1. Vorrichtung (1) mit einem Stromversorgungsmechanismus, die einen beweglichen Körper (2), der sich entlang einer Schiene (1R) bewegt, und einen Stromversorgungsmechanismus (3), der Strom zu dem beweglichen Körper (2) zuführt, umfasst,
wobei der Stromversorgungsmechanismus (3) umfasst:
eine primäre Spule (4), die sich entlang der Schiene (1R) erstreckt,
einen Magnetkern (6), der in der primären Spule (4) vorgesehen ist und kürzer als die primäre Spule (4) ist,
ein rohrförmiges Glied (50), das in dem beweglichen Körper (2) vorgesehen ist und in das die primäre Spule (4) eingesteckt ist,
eine sekundäre Spule (5), die um eine Außenumfangsfläche des rohrförmigen Glieds (50) gewunden ist und zu der Strom von der primären Spule (4) aufgrund einer elektromagnetischen Induktion zugeführt wird,
einen ersten Magneten (7), der in dem Magnetkern (6) vorgesehen ist, und
einen zweiten Magneten (8), der in dem rohrförmigen Glied (50) vorgesehen ist,
wobei sich der Magnetkern (6) in der primären Spule (4) in Verbindung mit dem beweglichen Körper (2) aufgrund einer Magnetkraft des ersten Magneten (7) und der zweiten Magnetkraft (8) bewegt.

2. Vorrichtung (1) mit einem Stromversorgungsmechanismus nach Anspruch 1, wobei:
die Vorrichtung zwei erste Magneten (7, 70) umfasst, wobei einer der ersten Magneten (7, 70) an einer ersten Endseite des Magnetkerns (6) in einer Axialrichtung desselben vorgesehen ist und der andere der ersten Magneten (7, 70) an einer zweiten Endseite des Magnetkerns (6) in einer Axialrichtung desselben vorgesehen ist,
die Vorrichtung zwei zweite Magneten (8, 80) umfasst, wobei einer der zweiten Magneten (8, 80) an einer ersten Endseite des rohrförmigen Glieds (50) in einer Axialrichtung desselben vorgesehen ist und der andere der zweiten Magneten (8, 80) an einer zweiten Endseite des rohrförmigen Glieds (50) in einer Axialrichtung desselben vorgesehen ist,
die gleichen Pole der ersten Magneten (7, 70) und der zweiten Magneten (8, 80) an gegenüberliegenden Positionen angeordnet sind, und
der Magnetkern (6) an einer Position zwischen den zwei zweiten Magneten (8, 80) gehalten ist.

3. Vorrichtung (1) mit einem Stromversorgungsmechanismus nach Anspruch 2, wobei:
die gleichen Pole der zwei ersten Magneten (7, 70), die den Magnetkern (6) umgeben, an gegenüberliegenden Positionen angeordnet sind.

4. Vorrichtung (1) mit einem Stromversorgungsmechanismus nach einem der Ansprüche 1 bis 3, die weiterhin umfasst:
Zwischenglieder (61, 62), die zwischen dem Magnetkern (6) und den ersten Magneten (7, 70) angeordnet sind,
wobei die Zwischenglieder (61, 62) aus einem nicht-magnetischen Material ausgebildet sind.

5. Vorrichtung (1) mit einem Stromversorgungsmechanismus nach einem der Ansprüche 1 bis 4, die weiterhin umfasst:
Verstärkungsglieder (40, 41), die rohrförmig sind, an einer Innenumfangsseite und/oder einer Außenumfangsseite der primären Spule (4) vorgesehen sind und die Form der primären Spule (4) halten,
wobei die Verstärkungsglieder (40, 41) aus einem nicht-magnetischen und isolierenden Material ausgebildet sind.

6. Vorrichtung (1) mit einem Stromversorgungsmechanismus nach einem der Ansprüche 1 bis 5, die weiterhin umfasst:
einen Verbindungsmechanismus (24), der das rohrförmige Glied (50) und den beweglichen Körper (2) entfernbar miteinander verbindet.

7. Vorrichtung (1) mit einem Stromversorgungsmechanismus nach einem der Ansprüche 1 bis 6, wobei die Vorrichtung (1) mit dem Stromversorgungsmechanismus eine Flachstrickmaschine ist.

8. Vorrichtung (1) mit einem Stromversorgungsmechanismus nach Anspruch 7, wobei der bewegliche Körper (2) ein Fadenführer (2) ist.

## Revendications

1. Dispositif avec mécanisme d'alimentation électrique (1) comprenant : un corps mobile (2) qui se déplace le long d'un rail (1R) ; et un mécanisme d'alimentation électrique (3) qui fournit une alimentation électrique au corps mobile (2),
le mécanisme d'alimentation électrique (3) comprenant :
une bobine primaire (4) qui s'étend le long du rail (1R) ;
un noyau magnétique (6) qui est prévu à l'intérieur de la bobine primaire (4) et qui est plus court que la bobine primaire (4) ;
un élément tubulaire (50) qui est prévu dans le corps mobile (2) et dans lequel la bobine primaire (4) est insérée ;
une bobine secondaire (5) qui est enroulée autour d'une face circonférentielle externe de l'élément tubulaire (50) et à laquelle une alimentation électrique est fournie à partir de la bobine primaire (4) grâce à une induction électromagnétique ;
un premier aimant (7) prévu dans le noyau magnétique (6) ; et
un deuxième aimant (8) prévu dans l'élément tubulaire (50) ,
dans lequel le noyau magnétique (6) se déplace à l'intérieur de la bobine primaire (4) conjointement avec le corps mobile (2), grâce à une force magnétique du premier aimant (7) et de la deuxième force magnétique (8).

2. Dispositif avec mécanisme d'alimentation électrique (1) selon la revendication 1,
dans lequel le dispositif comprend deux premiers aimants (7, 70), un des premiers aimants (7, 70) est prévu sur un premier côté d'extrémité du noyau magnétique (6) dans une de ses directions axiales, et l'autre des premiers aimants (7, 70) est prévu sur un deuxième côté d'extrémité du noyau magnétique (6) dans une de ses directions axiales,
le dispositif comprend deux deuxièmes aimants (8, 80), un des deuxièmes aimants (8, 80) est prévu sur un premier côté d'extrémité de l'élément tubulaire (50) dans une de ses directions axiales, et l'autre des deuxièmes aimants (8, 80) est prévu sur un deuxième côté d'extrémité de l'élément tubulaire (50) dans une de ses directions axiales,
les mêmes pôles des premiers aimants (7, 70) et des deuxièmes aimants (8, 80) sont disposés à des positions opposées, et
le noyau magnétique (6) est maintenu au niveau d'une position intercalée entre les deux deuxièmes aimants (8, 80).

3. Dispositif avec mécanisme d'alimentation électrique (1) selon la revendication 2,
dans lequel les mêmes pôles des deux premiers aimants (7, 70) entre lesquels le noyau magnétique (6) est intercalé sont disposés à des positions opposées.

4. Dispositif avec mécanisme d'alimentation électrique (1) selon l'une quelconque des revendications 1 à 3, comprenant en outre
des éléments interposés (61, 62) disposés entre le noyau magnétique (6) et les premiers aimants (7, 70),
dans lequel les éléments interposés (61, 62) sont constitués d'un matériau non magnétique.

5. Dispositif avec mécanisme d'alimentation électrique (1) selon l'une quelconque des revendications 1 à 4, comprenant en outre
des éléments de renforcement (40, 41) qui sont tubulaires, qui sont prévus sur au moins un côté parmi un côté circonférentiel intérieur et un côté circonférentiel extérieur de la bobine primaire (4) et qui maintiennent une forme de la bobine primaire (4),
dans lequel les éléments de renforcement (40, 41) sont constitués d'un matériau non magnétique et isolant.

6. Dispositif avec mécanisme d'alimentation électrique (1) selon l'une quelconque des revendications 1 à 5, comprenant en outre
un mécanisme de connexion (24) qui relie de façon amovible l'élément tubulaire (50) et le corps mobile (2) l'un à l'autre.

7. Dispositif avec mécanisme d'alimentation (1) selon l'une quelconque des revendications 1 à 6, dans lequel le dispositif avec mécanisme d'alimentation (1) est une machine à tricoter à plat.

8. Dispositif avec mécanisme d'alimentation électrique (1) selon la revendication 7, dans lequel le corps mobile (2) est un dispositif d'alimentation en fil (2).
